# EUROPEAN PATENT APPLICATION

(11) **EP 2 631 864 A1**
(43) Date of publication of application: **28.08.2013**
(21) Application number: 13156137.5
(22) Date of filing: 21.02.2013
(51) Int. Cl.: G06Q 30/06, G07C 9/00, G07F 9/02, H04M 3/523, G06Q 10/06

(54) **Age verification system and method for efficient handling of age verification requests**

(30) Priority: 21.02.2012 NL 2008323
(71) Applicant: Hollandse Exploitatie Maatschappij B.V., 4801 BD Breda (NL)
(72) Inventor: Benschop, Dirk Leonard, 4801 BD Breda (NL); Sciarone, Sander Ewout, 4801 BD Breda (NL)
(74) Representative: De Vries & Metman

(57) **Abstract**

The disclosure relates to an age verification system and method for settling age verification requests. An age verification request is made unavailable for a processing display unit and other display units when the processing unit processing the age verification request does not settle the age verification request and issues an instruction for a customer at the supplier system. The instruction from the display unit to the supplier system is configured to generate a message for the customer at the customer terminal relating to the consumer image or the document image. The age verification request is made available again for settling at the display units when an instruction from the supplier system is received.

## Description

### FIELD OF THE INVENTION

The invention relates an age verification system and method for efficient handling of age verification requests.

### BACKGROUND

Nowadays, items as tobacco and alcoholic beverages receive increased attention as to their free availability for the under-aged. Instances of selling age-restricted goods to underage individuals often result from careless employee verifications of a consumer's age before the consumer purchases age-restricted goods. Commonly, employees who are supposed to be verifying a consumer's age will generally not ask for the consumer's identification, even not when systems prompt employees to execute age verification. In systems that prompt employees to verify the age of a customer, employees can also simple overrule the prompt and thus contribute to unauthorised sale to minors. Such careless age verification results in availability of alcohol and tobacco to minors.

On the other hand, government authorities are increasingly willing to enforce fines and license suspension penalties on establishments that sell age-restricted goods to underage individuals. If authorities catch an employee selling age-restricted products to underage consumers, the manager or owner is often held responsible for the employee's actions and may even have their license to sell age-restricted goods revoked as a result of their employee's careless behaviour.

A system and method for age verification resolving the above issues has been disclosed in WO 2009/113846.

WO 2009/113846 discloses a cash register system for verifying the age of a person that intends to purchase an age-restricted item. A video camera is provided that is configured for capturing an image of the person (person image). The image of the person is transmitted to a remote age verification system and an authorization signal is received from the age verification system after it has been determined that the person is of appropriate age. The cash register system contains a controller configured for providing a release signal only in response to receiving the authorization signal to allow payment of said age-restricted item. A document reader is also provided for capturing an image of an identification document of the person (document image). If the age of the person cannot be determined from the person image, an identification request signal is received representing a request for providing an identification document to the document reader. The document image is also transmitted to the remote age verification system and the authorization signal for allowing purchase of the age-restricted item is sent when it is determined from the document that the person has the appropriate age.

In WO 2009/113846, the applicant of the present application disclosed that the age verification requests are handled at the remote age verification system using a waiting queue of images that are distributed amongst display units by executing a round robin distribution process. Whereas the method for age verification has proved to be very effective to prevent sales of age-restricted items to minors, the applicant has observed that the increased number of age verification requests to be handled at the remote age verification system requires a request distribution method tailored to an age verification system. The high number of requests needs to be handled efficiently at the remote age verification system in order not to waste valuable capacity.

US 2002/0099681 discloses an email management system designed to handle large volumes of email. Incoming mail is processed and routed to a specific mail queue. When the message is moved to a mail queue, a mail queue timer is assigned. Each mail queue has a different mail queue timeout value that specifies the maximum amount of time that a message may sit idle within the mail queue. Users may subscribe to mail queues and messages may be transferred automatically from a mail queue into a mailbox of a user that subscribed to that mail queue. A mail box timer is then set for the message specifying the amount of time that a message may sit idle in the mailbox. If the mailbox timer expires without the message being handled, the message is routed back to the mail queue. If the mail queue timer has expired, the message is routed to another queue.

### SUMMARY

Hereinafter, embodiments of the invention aiming to alleviate the problem described above will be described in further detail. It should be appreciated, however, that these embodiments may not be construed as limiting the scope of protection for the present invention. For instance, combinations of any of the embodiments and limitations are envisioned by the disclosure.

To that end, an age verification system is disclosed that is configured for settling a request for age verification from a supplier system. The supplier system contains a customer terminal configured for registering a customer image and a document image for the age verification. The age verification system comprises a central computer system an a plurality of display units connected to the central computer system.

The central computer system is configured for receiving and storing an age verification request from the supplier system. The received age verification request is made available for the display units for settling at a display unit. One of the display units then processes the age verification request.

The age verification request from the supplier system is made unavailable for other display units when the request is processed at the processing display unit.

The stored age verification request is made unavailable to the processing display unit (the display unit initially processing the request) and the other display units if the age verification request is not settled at the processing display unit at once (i.e. on the basis of the person image alone) and issues an instruction for the supplier system. The instruction is configured for generating a message for the customer at the supplier system, wherein the message relates to the customer image or the document image.

The central computer system is configured to receive an instruction from the supplier system. In response to that instruction, the central computer system makes the unavailable age verification request available again for settling at one of the display units.

The disclosure also relates to the central computer system of the age verification system, to a method for operating the age verification system and to a computer program implementing the method when executed by a computer system.

It has become apparent to the applicant of the present application that the age verification method is prone to significant variations in time for settling of age verification requests. The disclosed system and method take account of those variations by configuring the remote age verification such that waste of resources is minimized at the age verification centre independent of the time it takes for the consumer to participate in age verification process at the supplier system side. Reactivation of processing the age verification request at one of the display units is determined by the customer.

The age verification method and system may be generally applied by businesses offering age-restricted goods as mentioned previously or age-restricted services. Age restricted services include e.g. entry of a building or other premises for an event not aimed at people under or above a particular age. The supplier system may e.g. comprise a tourniquet provided with an age verification terminal.

It should be appreciated that the age verification request that has be come available again is related to (e.g. having the same source) but not necessarily identical to the original age verification request. The age verification request made available anew may contain further, different or updated information. An example of updated information concerns e.g. an updated time stamp.

It should be appreciated that the age verification request being made available anew after receipt of the instruction from the supplier system may be processed or settled at another display unit than the display unit causing issuing of the instruction for generating the message for the customer at the supplier system.

It should further be appreciated that, besides the age verification terminal, the supplier system may comprise a payment system. In an embodiment of the invention, the payment system and the age verification terminal are only coupled via the remote age verification system without any direct connection. This facilitates installation at the supplier side of the means for performing the age verification method. As soon as a transaction is initiated, the payment system informs the remote age verification system of the start of the transaction. If an age-restricted item is bought, the cashier or the payment system may signal to the customer that he should use the age verification terminal before the item can be processed by the payment system. The customer should then himself use the age verification terminal for the age verification.

The payment system has access to information regarding which items are age-restricted and which age applies to which items.

If the customer is aware of the fact that age verification is required, he may immediately use the age verification terminal before he is prompted to use the terminal, provided that the transaction initiation has occurred.

In an embodiment of the invention, the age verification request has been made unavailable during a time interval having a starting time and an ending time. The ending time is triggered by the instruction received from the supplier system. More particularly, the customer may cause the customer age verification terminal to issue the instruction by operating a means on the terminal. Alternatively, the registration means of the customer age verification terminal may be configured to issue the instruction upon registering an event (e.g. an identification document being exposed on a document reader at the customer terminal). This embodiment enables the operator at the display units processing the age request for a customer to process or settle other age verification requests for other customers while the customer is busy performing particular acts for the age verification process.

In an embodiment of the invention, the age verification system may be configured for receiving the customer image and the document image substantially simultaneously, i.e. without a further instruction from the age verification system and/or the age verification terminal. This may be advantageous for customers who are of a critical age, e.g. between 15 - 25 years old, and are regularly requested to present the identification document in addition to the customer image. The customer image and document image are presented on the display unit of the age verification centre in one go and a positive authorization signal settling the age verification request may immediately be issued.

In an embodiment of the invention, when the customer image has been received and a document image is required, the system temporarily stores the customer image. The document image is subsequently be received together with a new customer image. The customer images may then be compared in order to prevent that an older person replaces the customer when a document image is requested.

The customer image and the document image may be received either substantially simultaneously or sequentially during a transaction at the supplier system, the central computer system may be configured for storing the customer image and/or the document image for the duration of the transaction. In particular, the customer image may be stored for the duration of the transaction in response to an instruction for generating a message at the age verification terminal associated with registering the document image such that thereafter only the document image is received once again. Furthermore, the document image may be stored for the duration of the transaction in response to an instruction for generating a message at the age verification terminal associated with registering the customer image such that thereafter only the customer image is received once again. This embodiment ensures that images are not exchanged unnecessarily, saving bandwidth.

In a further embodiment of the invention, the supplier system comprises a payment system (e.g. a cashier system or a self-service device) and the age verification terminal. The central computer system is configured to receive the age verification request from the age verification terminal. The central computer system is configured to receive a transaction initiation signal from the payment system and to relate the payment system to the age verification terminal. The central computer system is configured to make the age verification request available for settling for the display units after determining that the age verification request originates from an age verification terminal for which a transaction initiation signal has been received from a related payment system. This embodiment enables a simple method for establishing a one-to-one relationship between a transaction and an age verification request and enables the age verification system to prepare for a potential age verification request while at the same time it is ensured that the receiving of the transaction initiation signal alone, i.e. without the age verification request, is insufficient to start the age verification procedure.

In an embodiment of the invention, the central computer system is configured for receiving a request for settling an age verification request from one of the display units and for exclusively assigning the age verification request to the display unit in response to the request. The display units are programmed to issue settling requests for the central computer system substantially continuously in order to allow processing or settling of one or more other age verification requests from other age verification terminals once an instruction for generating a message related to the customer image or document image for a previous request has been issued. It has been found that a high efficiency can be obtained in an advantageous embodiment wherein the settling requests from a display unit are received at the central computer system at least every second, preferably at least every 0.5 seconds or even at least every 0.25 seconds.

In an embodiment, the supplier system comprises a payment system and an age verification terminal. The central computer system is configured for prohibiting payment at the payment system and, preferably, for informing the customer at the customer terminal of the reason for prohibiting the payment. This embodiment protects the privacy of the customer while still being effective in preventing the customer to obtain goods or services requiring the customer to be at least of a particular age.

In an embodiment of the invention, the age verification request does already include the customer image and the age verification system is configured for storing the age verification request including the customer image and making the customer image available for settling at a display unit. This embodiment allows the customer to immediately have his or her image registered and continue with other activities, e.g. packing goods in a bag. Such an embodiment is particularly useful for customers knowing that a document image is not likely to be requested.

Alternatively, the age verification system is configured for transferring the customer image from the age verification terminal to the display unit after the display unit has received the age verification request from the central computer display. This embodiment may avoid temporal storage of the customer image at the central computer system.

In still another embodiment of the invention, the central computer system is configured for periodically receiving requests from the age verification terminals for availability of display units and for responding to the request in dependence of the availability of the display units. The embodiment has the advantage of informing customers immediately of delays or non-operation of the age verification system.

In a further embodiment of the invention, the central computer system is configured for taking back an age verification request from a display unit after it has been assigned to or retrieved by a display unit after a predetermined time interval without the display unit settling the age verification request. The age verification request may be made available again for other display units. This embodiment prevents not settled requests to block a transaction for periods longer than the predetermined time interval.

### BRIEF DESCRIPTION OF THE DRAWINGS

In the drawings:
FIGS. 1 is a schematic illustration of a system comprising supplier systems and an age verification system according to an embodiment of the invention;
FIGS. 2A-2D are schematic illustrations of a payment system, an age verification terminal, a central computer system and a display unit of the system of FIG. 1.
FIGS. 3A and 3B are time charts depicting an embodiment of operating the system of FIG. 1.

### DETAILED DESCRIPTION OF THE DRAWINGS

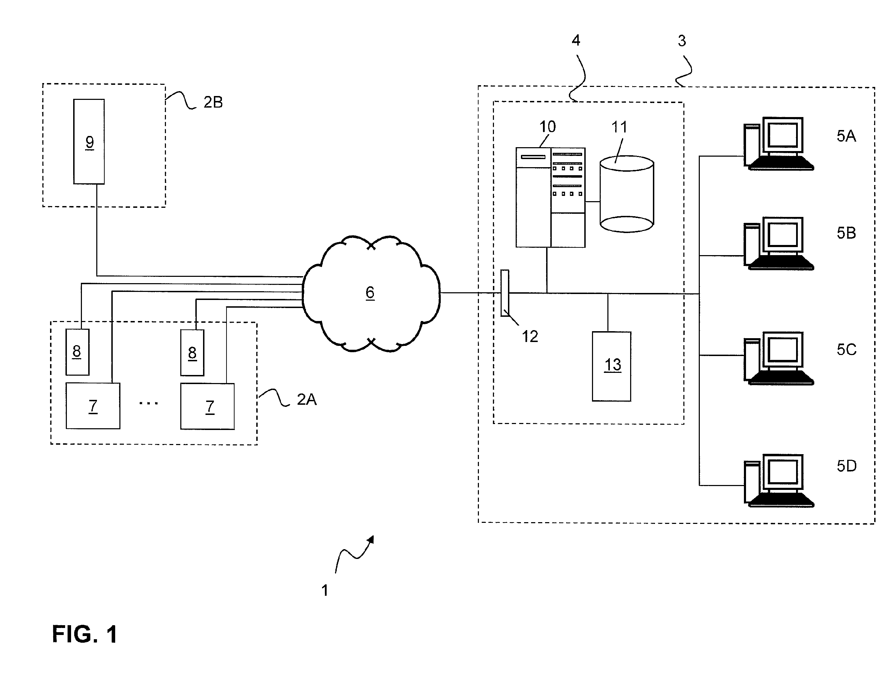

FIG. 1 is a schematic illustration of a system 1 comprising a first supplier system 2A and a second supplier system 2B. System 1 further comprises an age verification system 3 containing a central computer system 4 and a plurality of display units 5A-5D. Supplier systems 2A, 2B are connected via a network 6, e.g. a private network or a wide area network, to the age verification system 3.

Supplier system 2A contains a plurality of payment systems 7 and age verification terminals 8. Each of the payment systems 7 is connected to the age verification system 3. Each payment system 7 has an associated age verification terminal 8 that is connected separately to the age verification system 3. Preferably, payment system 7 and associated age verification terminal 8 are not connected to each other for the purpose of age verification. Supplier system 2A may contain many payment systems 7, e.g. cash desk devices, and may e.g. be located in a super market. The super market may sell a plurality of goods, amongst which are age-restricted items such as tobacco, alcoholic beverages, weapons etc.

Supplier system 2B has a supplier device 9 integrating an electronic payment system and age verification terminal for a self-service system. Supplier system 2B may also refer to a entrance system to a building or other venue for which age verification is to be applied, wherein the supplier system combines an age verification terminal 9 with e.g. a door or tourniquet.

Age verification system 3 comprises a central computer system 4 and a plurality of display units 5A-5D. Central computer system 4 may be located in the same building as the display units or may be located at a different location. Central computer system 4 comprises a server 10 (e.g. a web server) that is connected to a database 11. The central computer system is connected to the supplier systems 2A, 2B through a firewall 12. Central computer system 4 may comprise further computing systems, including e.g. a jump host 13. Jump host 13 enables display units 5A-5D to establish a direct link with age verification terminals 8, 9.

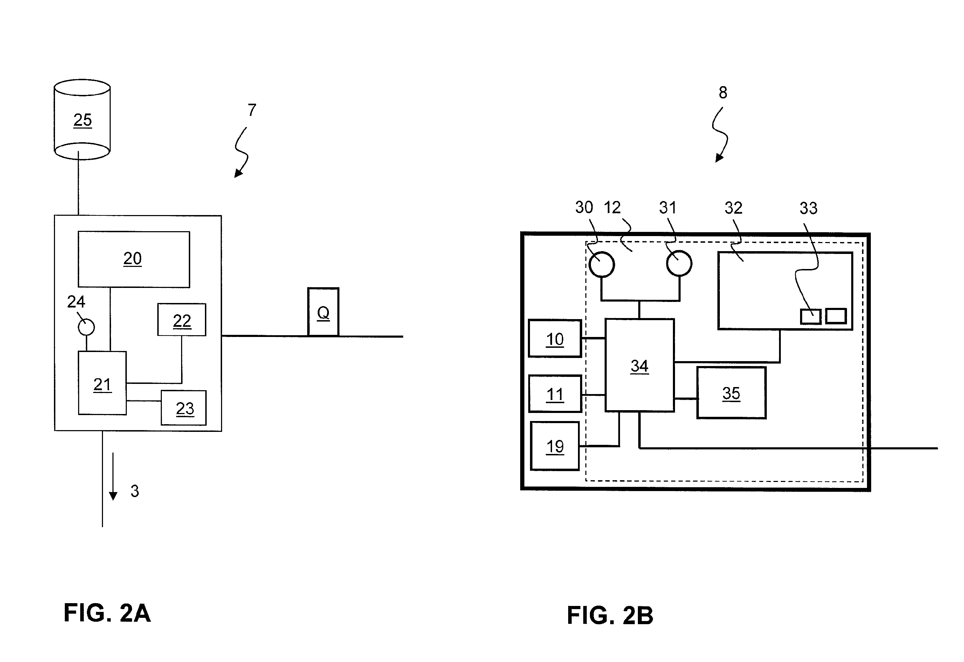

FIGS. 2A-2D depict schematic illustrations of several components of system 1 shown in FIG. 1.

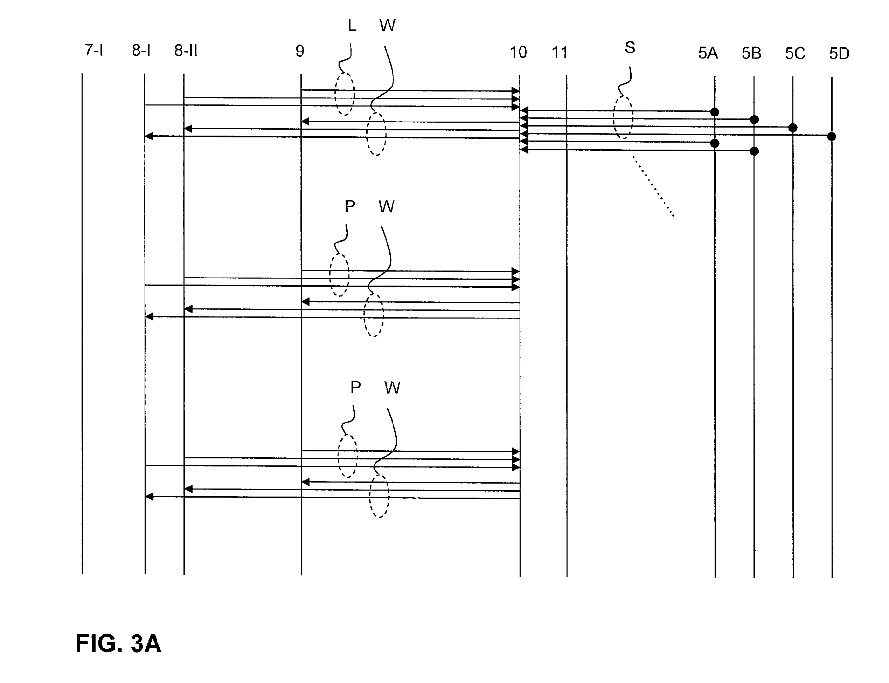

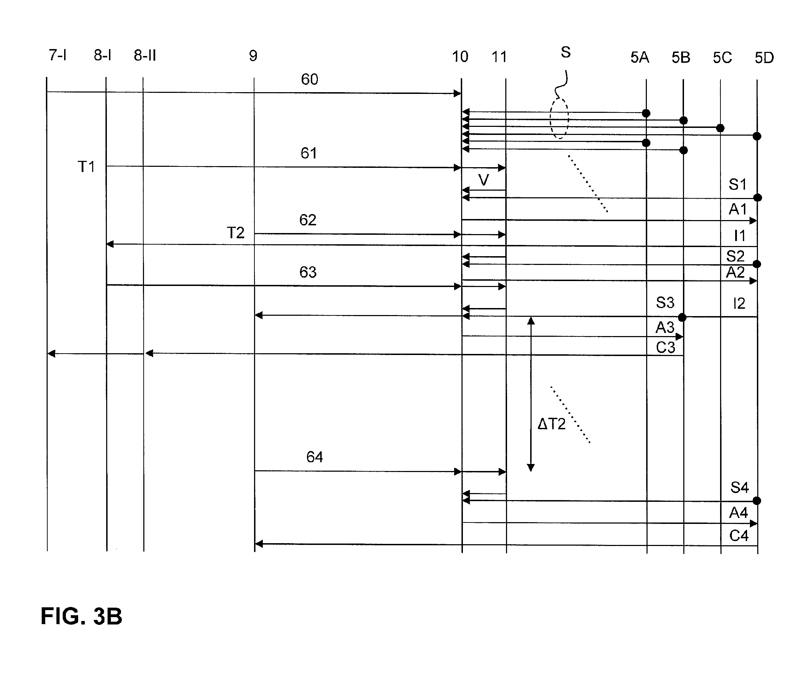

FIG. 2A is a schematic illustration of a payment system 7, e.g. a cash desk system. Payment system 7 comprises a user interface 20, a processor 21, a scanning device 22 for scanning bar codes, a memory 23 and a user-operatable means 24 (e.g. one or more buttons or other activation means). Payment system 7 has external connections to a database 25 operated by the supplier system 2A and to the age verification system 3. For a super market, typically, a conveyor belt for products Q is provided in the vicinity of the payment system 7. For smaller shops, products may be simply put on a counter for payment of a product Q. Functions for the payment system are executed by processor 21 using software code loaded from e.g. memory 23 into the processor. Information regarding products Q may be retrieved from either memory 23 or from an external database 25. Such information may e.g. relate to identifying whether or not a product Q is an age-restricted item and/or what age-classification is applicable for an age-restricted item. Other information, including e.g. price information, may of course also be stored. The operation of the payment system 7 will be further described with reference to FIGS. 3A and 3B.

FIG. 2B is a schematic illustration of an age verification terminal 8.

The age verification terminal 8 comprises a (video) camera 30 for capturing a (live) image of a person in front of the camera (a customer image) and a document reader 31 (which also comprises a video camera in the present embodiment) configured for reading an identification document (a document image) of that person. The customer image may be a photo of the face of the person, but other customer images (e.g. fingerprints) can be envisaged, in which case other types of capturing devices may be required. Identification documents include, but are not limited to, passports, identity cards, drivers licences etc. Preferably, the identification documents comprise a picture of the owner of the identification document in combination with information of the age of the owner. However, the documents may alternatively comprise information from which the age of the owner can be derived, e.g. at the age verification system 3. The age of the owner may e.g. be derived from information already stored by the age verification system 3 or by making a connection to an external system from which the age of the owner of the identification document can be derived using the information of the document.

It should be appreciated that the video camera 30 and the document reader 31 are not necessarily integral parts of the age verification terminal 8.

Other options than a document reader 14 are also envisaged, including fingerprint identification devices, iris scanners and flashcard readers. The information from such devices may be used to determine the accurate age of the person, possibly in combination with information from an external system or from the database 7 storing matches between iris scans, finger prints, flash card identities and the age of the associated person, possibly in combination with an earlier picture.

The age verification terminal 8 further comprises a display 32. The display 32 allows to inform potential purchasers that their image, and/or an image of an identification document may be required before an item can be purchased. This information may be mandatory to comply with privacy provisions in some areas. Furthermore, the display 32 may guide potential purchasers through the age verification process.

The display 32 may be a touch screen comprising (soft) keys 33 for entering instructions to the age verification terminal 8. The keys 33 may also be buttons with dedicated functions provided either inside or outside of the display area. In order to avoid undesired capturing of customer images by video camera 13, one of the keys 33 may be used to approve age verification.

The age verification terminal 8 comprises a processor 34 for executing functions of the terminal 8. Such functions may be executed by loading software from memory 35. An external connection to age verification system 3 is also provided.

The operation of the age verification terminal 8 will be further described with reference to FIGS. 3A and 3B.

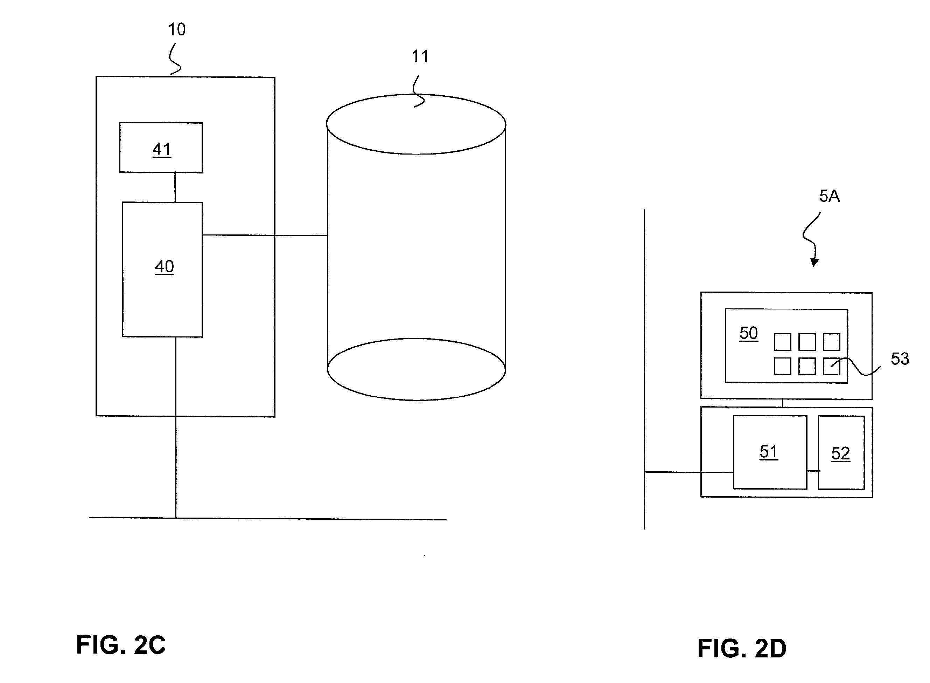

FIG. 2C is a schematic illustration of a central computer system 4 for the age verification system 3. The central computer system comprises a server 10 and a database 11, e.g. a web server and an Oracle database. Server 10 comprises a processor 40 and memory 41. Server 10 comprises external connections to at least exchange information with the supplier systems and with the display units 5a-5D.

Functions of the server 10 are executed using software code portions loaded from memory 41 into the processor 40. The operation of the central computer system 4 of the age verification system 3 will be further described with reference to FIGS. 3A and 3B.

FIG. 2D is a schematic illustration of a display unit 5A. Display unit 5A comprises a display 50 and a processor 51 connected to a memory 52. Display unit 5A is configured for displaying customer images and document images received either directly from the age verification terminal 7, 9 or be retrieved from the central computer system 4. Display unit 5A is to be operated by a human being verifying the customer images and document images. The display unit 5A is configured for allowing the human operator to issue various instructions related to the customer image and/or document image. The instruction is configured for generating a message for the customer at the supplier system, in particular at the display 32 of the age verification terminal, wherein the message relates to the customer image or the document image. In FIG. 2D, various keys 53 are illustrated on the display 50 allowing a human operator to issue a variety of instructions in order to generate messages on display 32 of the age verification terminals 8, 9. Examples of such messages include "take a better position in front of the camera", "present an identification document on the document reader 31", "identification document not valid, please present another identification document", "rotate identification document image by x degrees" etc.

A general overview of the interaction of the various systems will now be described. A more detailed description will be provided with reference to FIGS. 3A and 3B.

The age verification system 3 is configured for settling a request for age verification from a supplier system 2A, 2B. It should be appreciated that in the present disclosure the term "settling" is used for completing the age verification, i.e. to issue an authorization signal to the supplier system indicating whether or not sale of the product Q is allowed or for what age class the customer is entitled to buy items, whereas the term "processing" of the age verification is used independent of whether the age verification can be completed. As an example, an age verification request may be processed at a display unit to the extent that an additional instruction is sent for the supplier system and only after receiving further information from the supplier system, the request can be settled.

The central computer system 4, more particularly the server 10, is configured for receiving and storing an age verification request over the network 6 from the supplier system 2A, 2B, more particularly from the age verification terminal 8, 9. The received age verification request is stored in the database 11 and is made available for the display units 5A-5D for settling the request. One of the display units 5A-5D may start processing the age verification request.

The central computer system 4 may be configured to receive a transaction initiation signal from the payment system 7 and to relate the payment system to the age verification terminal 8,9. The central computer system 4 may then be configured to make the age verification request available for settling for the display units only after determining that an age verification request originates from an age verification terminal 8 for which a transaction initiation signal has been received from a related payment system 7.

The request may be taken by the display unit 5A. In an embodiment, the central computer system 4 is configured for receiving a request for settling an age verification request from one of the display units 5A-5D and for exclusively assigning the age verification request to the display unit 5A in response to the request. The display units 5A-5D are programmed to issue settling requests for the central computer system 4 substantially continuously, i.e. at intervals of short duration, e.g. a duration of less than 1 second, in order to allow processing or settling of one or more other age verification requests after processing a previous request. During processing of an age verification request, the age verification request is made unavailable for the other display units 5B-5D.

The age verification request may already include the customer image or the customer image may be transferred to the display unit 5A only after the display unit 5A has received the age verification request from the database 11.

If the age verification request cannot be settled, the age verification request is made unavailable for all display units 5A-5D. The age verification request may be made unavailable for a particular time interval. The starting point of the time interval may be triggered by an instruction issued from the display unit 5A relating to at least one of the customer image and the document image that is configured to generate a message for the customer at the display 32.

The temporarily unavailable age verification request is made available again after receiving an instruction from the supplier system. Thus, the age verification request being made available anew after receiving the instruction, e.g. when the time interval has expired, and may be processed or settled at another display unit 5B-5D than the display unit 5A causing issuing of the instruction for generating the message for the customer at the supplier system.

In the above system, the new availability of the age verification request is triggered by an instruction received from the age verification terminal 8, 9. More particularly, the customer may cause the customer age verification terminal to issue the instruction by operating a key 33. Alternatively, the registration means 30, 31 of the age verification terminal 8 may be configured to issue the instruction upon registering an event (e.g. an identification document being exposed on document reader 31 at the age verification terminal. The receipt of the instruction from the supplier system may determine the ending time of the time interval during which the age verification request in the database 11 was made unavailable.

The central computer system 4 will normally be configured to read the customer image and the document image in one step, even if the document image is not (yet) exposed by the customer to the document reader 31. In other words, the system allows customers to present the identification document already at the time of registering the customer image which is particularly beneficial for customers who are of a critical age, e.g. between 15 - 25 years old, and are regularly requested to present the identification document in addition to the customer image.

When the customer image and the document image have been received either substantially simultaneously or sequentially during a transaction at the supplier system 2, the central computer system 4 may store the customer image and/or the document image for the duration of the transaction. As an example, the customer image may be stored for the duration of the transaction in response to an instruction from a display unit 5A-5D for generating a message at the age verification terminal 8,9 associated with registering the document image such that thereafter only the document image is received once again. Furthermore, the document image may be stored for the duration of the transaction in response to an instruction from a display unit 5A-5D for generating a message at the age verification terminal 8, 9 associated with registering the customer image such that thereafter only the customer image is received once again. The customer image and/or the document image may also be stored when received from the supplier system and be deleted in response to issuing an authorization signal from the display unit.

A detailed embodiment of the invention will now be described with reference to FIGS. 3A and 3B. FIGS. 3A and 3B are time diagrams showing sequence of steps of an age verification procedure in the system of FIG. 1, wherein various entities involved in the procedure are depicted along the horizontal axis and time is depicted along the vertical axis (not drawn to scale).

FIG. 3A relates to a time diagram for a situation wherein no age verification requests are made by customers. Age verification terminals 8-I, 8-II and 9 login to the web server 10. The login L may contain one or more identifiers, e.g. an identifier of the terminal and possibly an identifier of the supplier system to which the terminal belongs. The web server 10 analyzes whether each of the terminals is entitled to connect to the web server 10, possibly using the data base 11 (not shown in FIG. 3A), and also verifies whether display units 5A-5D are available for settling potential age verification requests. Depending the on the result of the analysis by the web server, the web server 10 returns a web page W to each of the age verification terminals. In case the analysis reveals that no display units 5A-5D are available for age verification, the web page displayed on the display 32 of the age verification terminals displays a message that age verification is temporarily out of operation. The message from the web server 10 also contains an instruction for each of the age verification terminals to ping P the server 10 again after a predetermined time interval, e.g. after 5 or 10 seconds, after the instruction has been received. The ping interaction by the age verification terminals 8-I, 8-II and 9 with the server 10 again returns a web page W and an instruction to ping P the server again after the predetermined time interval.

The server 10 is also involved in processes within the age verification system 3 as depicted in FIG. 3A. Each of the display units 5A-5D, after having been logged on to the server 10, periodically sends settling requests S to the server 10 to find out whether any age verification requests from terminals 8-I, 8-II, 9 are available for being settled. The time intervals for the settling requests are shorter than for the ping requests by the age verification terminals 8-I, 8-II and 9. The time interval between two settling requests by a display unit 5A-5D to the server is generally 1 second or shorter, e.g. 0,5 second or 0,25s. The web server 10 uses the settling requests S to determine whether display units 5A-5D are available for age verification and uses this information to signal to the age verification terminals 8-I, 8-II and 9 whether age verification is operative in the web page W.

Furthermore, the settling requests S are used to assign age verification requests to one of the display units 5A-5D as will now be described with reference to FIG. 3B.

In FIG. 3B, some of the communication between the age verification terminals 8-I, 8-II, 9 and the server 10 has been omitted for clarity reasons. The continuing settling requests S by the display units 5A-5D to the server are indicated by black dots on the vertical lines as well as the diagonal series of points.

Cashier desk 7-I of supplier system 2A initiates a new transaction which is communicated to the server 10 by means of a transaction initiation signal 60. The transaction initiation signal 60 issued by the cashier desk 7-I (e.g. by an operator activating a button 24 when a new customer arrives or scanning a first product Q using bar code reader 22) contains a location of the cashier desk and a transaction identifier. Server 10, while continuing to receive settling requests S from display units 5A-5D, stores information of the transaction initiation signal into the database 11.

At a certain point in time T1, the web server 10 receives an age verification request 61 from the age verification terminal 8-1 that is associated with the cashier desk 7-I. The age verification request 61 is triggered by a 50-year old customer standing in front of video camera 30 and operating key 33 that immediately captures a customer image. The age verification request contains the location of the age verification terminal 8-I and, in this case, also the customer image. Server 10 looks into the database 11 and finds that a transaction initiation signal 60 was previously received from a cashier desk 7-I of the same location as the age verification terminal 8-I, such that server 10 can validate V the age verification request 61. The customer image may also be stored in the database 11 or elsewhere.

Following the validation, server 10 makes age verification request 61 available for settling by a human operator at one of the display units 5A-5D. In the series of settling requests S, it happens to be that server 10 receives a settling request S1 first from display unit 5D after the age verification request 61 has been made available. Therefore, server 10 assigns A1 the age verification request for terminal 8-1 to display unit 5D. The customer image that had already been received with the age verification request 61 is also available for the human operator.

At a time T2, an age verification request 62 is received by the server 10 from the integrated payment/age verification terminal 9. Again the server 10 processes the age verification request 62 for validation of the request.

In the mean time, the human operator at display unit 5D operates one of the keys 53 to issue an instruction I causing a message to be displayed on display 32 of age verification terminal 8-I that the customer should assume a better position before the camera 31 in order to allow the operator to evaluate the age of the customer. By the same token, the age verification request 61 is made unavailable to both the processing display unit 5D and the other display units 5A-5C. Since instructions to assume a better position before the camera 30 may be followed quickly, only a short time lapses before an instruction is received from the customer terminal 8-I and reactivates settling of the age verification request 61. If the instruction would have been different, e.g. relating to the presentation of an identification document, a longer time would lapse since it generally takes considerable time before a customer exposes an identification document to the document reader 31.

After having processed age verification request 61 and having issued instruction I1 (i.e. age verification request 61 has not yet been settled), display unit 5D has resumed sending settling requests S again and it may therefore occur that settling request S2 succeeds in getting assigned A2 age verification request 62 from age verification terminal 9. While display unit 5D is processing age verification request 62, age verification request 61 is reactivated as a result from receiving an instruction 63 from the terminal 8/1 and made available again for the display units. Instruction 63 generated at age verification terminal 8-I contains a new customer image. Age verification request 61 is now picked up by display unit 5B having issued settling request S3 to get assigned A3 age verification request 61. The human operator at display unit 5B determines from the new custom image that the customer has an appropriate age (50) for purchasing any products in the store and issues an age classification signal C3 for the cashier desk signalling that any product may be purchased by this customer thus settling the age verification request that was initially processed at display unit 5D. The operator of the cashier desk 7-I is thus enabled to complete the transaction since the classification signal C will not block the cashier desk 7-I for any item. At the same time, a signal is sent to the age verification terminal 8-I displaying on the interface information that any products may be purchased. The initial and new customer images are deleted from the age classification system 3 on issuing the age classification signal C3.

It should be appreciated that the payment systems 7 may also poll the server 10 for age verification results. In one embodiment, the payment system polls server 10 for age verification results as soon as the payment system has informed the remote age verification system of the initiation of the transaction and the remote age verification system has registered the transaction.

At the same time as display unit 5B sent settling request S2, display unit 5D issued instruction I2 for the customer at age verification terminal 9 to present an identification document following receiving a customer image directly from the registration means 30 of a young man. At the same token, the server 10 makes age verification request 62 unavailable for both display unit 5D and display units 5A-5C for a particular time interval ΔT2. The end point of the time interval is again determined by receiving an instruction from the age verification terminal 9. Examples include the customer operating one of the keys 33 after having exposed an identification document to the document reader 31 or the document reader itself detecting the presence of a document on the document reader. In other words, as soon as an instruction 64 from the document reader 31 is received by the server 10, the time interval ΔT2 ends and age verification request 62, possibly after checking with the data base 11, is made available again for settling. The instruction 64 forces further processing of the age verification request, thereby enhancing transaction speed at the supplier system.

Instruction 64 may contain the document image that is stored in the database 11. In addition, instruction 64 may again contain a customer image. The human operator at display unit 5D may compare both customer images to verify whether the initial customer image and the new customer image relate to the same customer and to verify from the identification document whether the customer is allowed to purchase the age restricted good.

Since no further age verification requests have been received and age verification request 61 has been settled, all display units 5A-5D have resumed sending settling requests S to the server 10. As indicated in FIG. 3B, in this case display unit 5D succeeds in getting assigned A4 settling of the age verification request following settling request S4. The document image is obtained via the server 10. From the document, the human operator determines that the customer at age verification terminal 9 is 17 and therefore issues age classification signal C4 allowing the customer to purchase items having age classification "16" but not items having age classification "18". Upon issuing age classification signal C4, the customer image and document image are deleted from the age classification system 3.

The server system 10 is configured for starting a timer as soon as an age verification request 61, 62 is assigned to a display unit 5A-5D. If an age verification request is not settled within a particular time interval, the assignment of the age verification request is ended and the age verification request is again made available for the display units 5A-5D, possibly excluding the display unit that did not achieve to settle the request. Simultaneously, the server 10 may cause a message to be displayed on display 32 that age verification is delayed or temporarily not operating.

It should be noted that the issuance of instruction I2 would have been unnecessary if the customer would immediately have presented the identification document to the document reader 31, since the server 10 is configured for retrieving both the customer image and document image in one step. In case the document image would for some reason be not suitable for settling the age verification request, the server 10 may be configured for storing the customer image received originally for the duration of the transaction in response to instruction I2 for generating a message at the age verification terminal associated with the erroneous registration of the document image. Thereafter, only the document image needed to be received. Furthermore, the document image may be stored for the duration of the transaction in response to an instruction for generating a message at the age verification terminal associated with erroneous registration of the customer image, if needed, such that thereafter only the customer image is received once again.

## Claims

1. An age verification system for settling a request for age verification from a supplier system, the supplier system containing a customer terminal configured for registering a customer image and a document image for the age verification and the age verification system comprising a central computer system and plurality of display units, the plurality of display units being connected to the central computer system, wherein the central computer system is configured for:
receiving and storing an age verification request from the supplier system;
making the received age verification request from the supplier system available for the display units for settling at a display unit;
processing the age verification request at a display unit of the plurality of display units;
making the request for age verification from the supplier system unavailable for the other display units when the request is being processed at the processing display unit;
making the request for age verification unavailable for the processing display unit and the other display units when the processing display unit processing the age verification request does not settle the age verification request and issuing an instruction for the supplier system, wherein the instruction is configured for generating a message for a customer at the customer terminal relating to the customer image or the document image;
in response to receiving an instruction generated at the supplier system, making the unavailable age verification request available again for settling at one of the display units.

2. The age verification system according to claim 1, wherein the age verification request is made unavailable for the processing display unit and the other display units during a time interval, wherein the time interval has a starting time and an ending time and the ending time is determined by the instruction generated at the supplier system causing the age verification request to become available again for settling at the display units.

3. The age verification system according to claim 1 or 2, wherein the central computer system is configured for storing the customer image and for receiving the document image together with a second customer image.

4. The age verification system according to one or more of the preceding claims, wherein the age verification system is configured for simultaneously receiving of the customer image and the document image.

5. The age verification system according to one or more of the preceding claims, wherein the supplier system comprises a payment system and the central computer system is configured for receiving the age verification request from the customer terminal and wherein the central computer system is further configured for receiving a transaction initiation signal from the payment system and for associating the payment system and the customer terminal, wherein the central computer system is further configured to make the age verification request available for settlement at the display units after verification whether the age verification request is received from a customer terminal for which a transaction initiation signal was registered for an associated payment system.

6. The age verification system according to one or more of the preceding claims, wherein the central computer system is configured for assigning processing of the age verification request exclusively to a display unit in response to a processing request from a display unit.

7. The age verification system according to one or more of the preceding claims, wherein the central computer system is configured for receiving processing requests from the display units at least once every second, preferably at least once every 0,5 seconds.

8. The age verification system according to one or more of the preceding claims, wherein the age verification request contains the customer image and the central computer system is configured for temporarily storing the person image, wherein making the age verification request available for the display units includes making the customer image available to the display units and for deleting the customer image in response to settling the age verification request.

9. The age verification system according to one or more of the preceding claims 1-7, wherein the age verification system is configured for transferring the customer image from the customer terminal to the display unit after the display unit has indicated to the central computer system that it will process the age verification request.

10. The age verification system according to one or more of the preceding claims, wherein the central computer system is configured for periodically receiving availability requests for display units from the customer terminal and for issuing responses to the customer terminal depending on the availability of the display units.

11. A computer-implemented method for settling a request for age verification from a supplier system, the supplier system containing a customer terminal configured for registering a customer image and a document image for the age verification and the age verification system comprising a central computer system and plurality of display units, the plurality of display units being connected to the central computer system, comprising:
receiving and storing an age verification request from the supplier system;
making the received age verification request from the supplier system available for the display units for settling at a display unit;
processing the age verification request at a display unit of the plurality of display units
making the request for age verification from the supplier system unavailable for the other display units when the request is being processed at the processing display unit;
making the request for age verification unavailable for the processing display unit and the other display units when the processing display unit processing the age verification request doest not settle the age verification request and issuing an instruction for the supplier system, wherein the instruction is configured for generating a message for a customer at the customer terminal relating to the customer image or the document image;
in response to receiving an instruction generated at the supplier system, making the unavailable age verification request available again for settling at one of the display units.

12. The computer-implemented method according to claim 11, further comprising the steps by the central computer system according to one or more of the claims 2-10.

13. A computer program containing software code portions for performing the method of claims 11 or 12 when installed on a computer system and processed by a processor of the computer system.

14. A central computer system for use in the age verification system according to one or more of the claims 1-10.
